# FASCICULE DE BREVET EUROPEEN

(11) **EP 3 729 003 B1**
(45) Date de publication et mention de la délivrance du brevet: **25.01.2023**
(21) Numéro de dépôt: 18842428.7
(22) Date de dépôt: 14.12.2018
(51) Int. Cl.: G01D 5/244

(54) **DETECTION ET ACCOMODATION DE CIRCUITS OUVERTS INTERMITTENTS SUR UN CAPTEUR MOTEUR D'UNE TURBOMACHINE D'AERONEF**
DETEKTION UND UNTERBRINGUNG VON INTERMITTIERENDEN OFFENEN SCHALTUNGEN AN EINEM MOTORSENSOR EINES FLUGZEUGTURBINENTRIEBWERKS
DETECTION AND ACCOMMODATION OF INTERMITTENT OPEN CIRCUITS ON AN ENGINE SENSOR OF AN AIRCRAFT TURBINE ENGINE

(30) Priorité: 18.12.2017 FR 1762365
(43) Date de publication de la demande: 28.10.2020
(73) Titulaire: Safran Aircraft Engines, 75015 Paris (FR)
(72) Inventeur: ANTONIO, Gilian Thierry, 77550 Moissy-Cramayel (FR); ESTEVE, Gwenael Thierry, 77550 Moissy-Cramayel (FR)
(74) Mandataire: Regimbeau
(86) Numéro de dépôt international: PCT/FR2018/053297
(87) Numéro de publication internationale: WO 2019/122632

(56) Documents cités:
- WO-A1-2016/097633
- DE-T2- 69 800 948
- FR-A1- 2 960 319
- FR-A1- 2 988 851
- FR-A1- 2 992 417

## Description

### DOMAINE TECHNIQUE

L'invention concerne la détection de contacts intermittents sur des sondes formant des capteurs de turbomachine d'aéronef, aussi appelés capteurs moteur.

L'invention vise plus spécifiquement un procédé de contrôle de mesure fournie par une sonde à deux voies formant capteur moteur afin de limiter les erreurs provoquées par des contacts intermittents, en cas de double panne des voies de sonde.

### ETAT DE LA TECHNIQUE

Une turbomachine d'aéronef comprend classiquement un grand nombre de pièces mécaniques mobiles, dont le comportement est surveillé en permanence au moyen d'une chaîne de mesure. Une chaîne de mesure comprend classiquement une sonde comprenant deux voies de mesure, communiquant chacune avec une voie d'un calculateur. Une sonde peut mesurer un grand nombre de paramètres physiques en différents endroits de la turbomachine. Ces mesures sont transmises au calculateur qui les traite, et fait parvenir au pilote de l'aéronef, ou à des dispositifs de régulation de la turbomachine, un ensemble d'informations relatives à l'état de la turbomachine. En cas de détection d'avarie sur la turbomachine, le pilote peut agir en conséquence afin de préserver la sécurité de l'aéronef et de ses passagers. Les dispositifs de régulation de la turbomachine peuvent également agir sur le comportement de la turbomachine afin de gérer l'avarie.

La plupart des chaînes de mesure actuelles sont électroniques. Les mesures sont transmises au calculateur sous forme de signal électrique. Les voies de calculateurs sont donc soumises à un signal temporel électrique (typiquement une tension) représentatif de la mesure acquise par la sonde. Cette technologie a fait ses preuves sur de nombreux moteurs d'aéronefs et offre un temps de réponse rapide, conforme aux besoins de régulation. Cependant, les chaînes de mesure de turbomachine d'aéronef fonctionnent dans un environnement dans lequel existent de fortes contraintes thermiques et vibratoires. Ces contraintes provoquent fréquemment des pannes de type contact intermittent. Un contact intermittent est une ouverture intermittente, et très brève, de circuit électrique, ou un retour intempestif à la masse. Ces phénomènes sont notamment observés lorsque les connecteurs de sonde se desserrent ou s'érodent, ou lorsque les éléments sensibles des voies de mesure présentent des défaillances. Les circuits ouverts intermittents apparaissent également lorsque des fils électriques liant les éléments sensibles de sonde à la connectique électronique de chaîne de mesure se rompent, ou que le mauvais assemblage des éléments sensibles dans le corps de sonde les rende sensibles aux vibrations et à la rupture.

Après avoir acquis la mesure, chaque voie de calculateur échange avec l'autre voie la valeur de la mesure ainsi que son statut électrique, par exemple la détection de circuits ouverts ou de court-circuit. De là, le calculateur est en mesure d'élaborer une mesure à transmettre à une interface de traitement qui génère les informations utiles au pilote ou aux dispositifs de régulation. De plus, pour certains paramètres mesurés, le calculateur dispose d'un modèle d'estimation de la mesure construit à partir de l'acquisition d'autre paramètres. En cas de conflits entre les mesures transmises aux deux voies de calculateur, le modèle d'estimation permet au calculateur d'arbitrer pour transmettre à l'interface de traitement la mesure la plus pertinente.

Le phénomène de circuit ouvert intermittent peut avoir des conséquences importantes. En effet, il est usuel que, en cas d'ouverture du circuit électrique sur une des voies de mesure, le calculateur impose une valeur de mesure reçue très élevée, dite valeur de saturation. Ce mécanisme permet d'invalider les informations reçues sur une voie de calculateur si l'ouverture du circuit est permanente, c'est-à-dire que la voie de mesure est en panne.

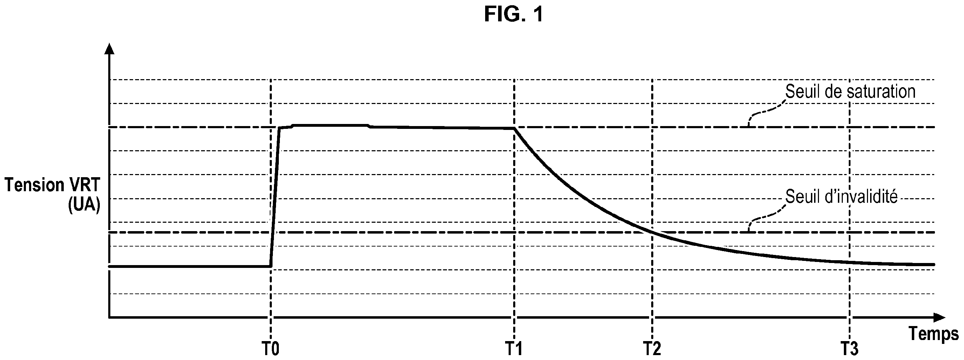

Or, comme illustré sur la figure 1, l'inertie des circuits électroniques compris dans la chaîne de mesure est telle que les voies de calculateur sont soumises à des phénomènes de relaxation électrique. La figure 1 représente l'évolution temporelle d'une tension fournie par une sonde de température de type thermocouple, également appelée tension VRT (ou « Variable Résistance Transducer » dans la terminologie anglo-saxonne), sur une voie de calculateur qui détecte au temps T0 un circuit ouvert sur la chaîne de mesure. Le calculateur fait alors passer la valeur de la tension VRT au seuil de saturation, qui est très supérieur au seuil d'invalidité, à partir duquel les signaux en provenance d'une voie de sonde sont ignorés. A un temps ultérieur T1, le circuit électrique est refermé. La tension VRT redescend alors progressivement au niveau du signal communiqué par la voie de sonde correspondante. Seulement, ce phénomène est trop lent par rapport à la fréquence de traitement de l'interface. Il faut en effet attendre le temps T2, ultérieur à T1, pour repasser le seuil d'invalidité, puis le temps T3, ultérieur à T2, pour acquérir une valeur correcte de la mesure. Or, l'interface de traitement utilise les valeurs de tension VRT entre T2 et T3, puisque celles-ci sont inférieures au seuil d'invalidité, alors que ces valeurs sont erronées. L'ouverture d'un circuit intempestive entraîne donc le renvoi d'informations erronées aux dispositifs de régulation de la turbomachine, ou au pilote.

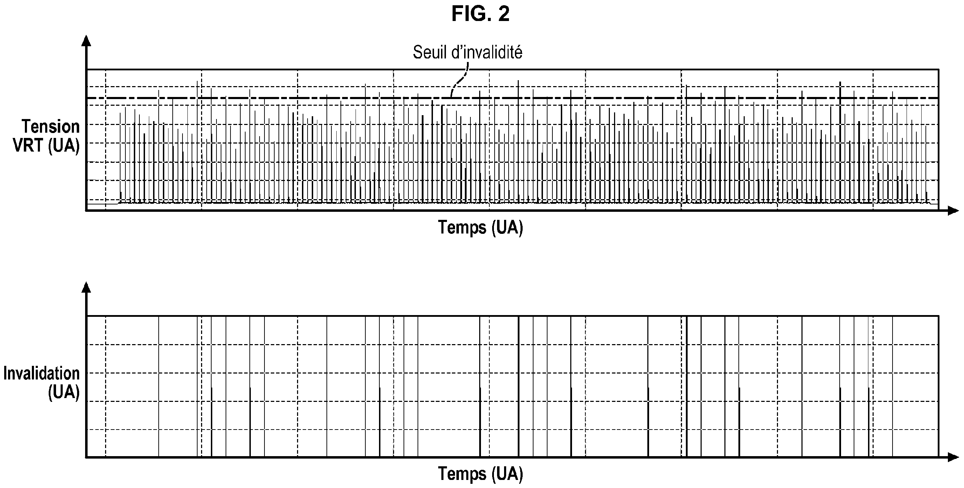

Dans le cas d'ouvertures intermittentes, la brièveté des ouvertures électriques conduit à des sauts de mesure conséquents, sans pour autant entraîner d'invalidité de la voie de calculateur, puisque la tension VRT n'a pas le temps d'atteindre le seuil d'invalidité. La figure 2 illustre une courbe de tension VRT affichant un signal issu d'un phénomène de circuits intermittents, et une courbe d'invalidité correspondante, qui affiche la valeur 1 lorsqu'une valeur est évaluée non valide par le calculateur. Dans le cas d'ouvertures intermittentes, l'intensité du signal peut dépasser ou non le seuil d'invalidité, suivant la durée d'ouverture du circuit. Si une ouverture entraîne un pic dans le signal, mais que ce saut de mesure n'atteint pas le seuil d'invalidité, l'interface de traitement reçoit la mesure. Or, cette valeur étant du même ordre de grandeur que lors d'avaries, les informations renvoyées par l'interface de traitement sont par conséquent erronées.

A titre d'exemple, il a déjà été constaté des arrêts moteurs en vol pour cause de contacts intermittents qui ont entraîné des fluctuations importantes de la mesure acquise par un capteur moteur dont la valeur intervenait dans le calcul de l'angle de commande des ailettes de compresseur. La perte de contrôle du compresseur a alors entraîné un pompage et des oscillations du régime moteur forçant le pilote à réduire puis éteindre totalement le moteur. Dans ce cas, il a été montré qu'une des deux voies de calculateur avait déjà été considérée comme invalide par le calculateur. Par conséquent, l'apparition de contacts intermittents sur la voie valide a entraîné une oscillation de la mesure transmise à l'interface de traitement entre une valeur erronée haute valide et la valeur d'un modèle d'estimation, précipitant la perte de contrôle du compresseur.

De nombreux procédés de détection des circuits ouverts intermittents ont déjà été proposés.

On connaît par exemple un procédé de détection qui comprend une étape de comparaison entre la mesure acquise sur la voie de calculateur valide et la valeur d'un modèle d'estimation pour s'assurer de la vraisemblance de la mesure. Cependant, cette détection n'est pas très efficace car le seuil de comparaison est très élevé afin d'éviter les fausses détections, ce qui ne permet pas de réagir suffisamment aux variations rapides de la mesure pouvant, par exemple, provoquer des pompages de turbomachine.

On connaît en outre du document FR 2 992 417 un procédé de surveillance d'un capteur moteur mettant en oeuvre des étapes de calcul sur les mesures de deux voies de capteur, ainsi que l'actualisation d'un indicateur en fonction des résultats des étapes de calcul. L'évolution de l'indicateur est alors contrôlée pour détecter la panne de l'un ou l'autre des circuits de capteur.

Cependant, ces procédés de détection ne permettent pas l'adaptation de la chaîne de mesure à la présence de circuits ouverts intermittents en cas de double panne. Par double panne, on comprend qu'une des deux voies est déclarée invalide et l'autre siège de courants intermittents, ou que les deux voies sont sièges de courants intermittents.

Il existe donc un besoin de proposer un procédé de contrôle de mesure acquise par un calculateur et fournie par une sonde moteur à deux voies de mesure, afin de détecter le phénomène de circuits ouverts intermittents et d'adapter la chaine de mesure en conséquence.

Les documents WO 2016/097633 A1 et FR 2 992 417 A1 qui représentent l'état de la technique divulguent des procédés de contrôle d'une mesure.

### BASE DE L'INVENTION

Un but de l'invention est de détecter les circuits ouverts intermittents de manière dynamique et efficace.

Un autre but de l'invention est de proposer un procédé de contrôle de la mesure acquise par une sonde formant capteur de turbomachine qui présente une meilleure réactivité au phénomène de circuits ouverts intermittents.

Un autre but de l'invention est de conserver la cohérence de la chaîne de mesure lors du fonctionnement de la turbomachine, et ce malgré une double panne des voies d'une sonde formant capteur moteur.

A cet égard, l'invention propose un procédé de contrôle d'une mesure fournie par une sonde formant un capteur moteur d'une turbomachine d'aéronef, et transmise à une interface de traitement de la mesure, la sonde comprenant une voie de mesure, ledit procédé étant mis en oeuvre par un calculateur de la turbomachine comprenant une voie de calculateur reliée à la voie de mesure de la sonde, le procédé comprenant les étapes de traitement de :
- acquisition d'une première valeur de la mesure sur la voie de calculateur,
- comparaison d'un incrément avec un seuil d'incrément,
- transmission à l'interface de traitement d'une mesure à traiter qui est choisi :
   ∘ égale à la valeur d'un modèle d'estimation de la mesure reçue, si l'incrément est supérieur au seuil d'incrément, ou
   ∘ égale à la première valeur de la mesure acquise, si l'incrément est inférieur au seuil d'incrément.

Si l'incrément est inférieur au seuil d'incrément, le procédé comprend alors des étapes supplémentaires de traitement de :
∘ acquisition d'une deuxième valeur de mesure sur la voie de calculateur, la deuxième valeur étant successive à la première valeur d'un intervalle de temps donné,
∘ comparaison entre l'écart entre, d'une part la première valeur acquise, et d'autre part la valeur correspondante du modèle d'estimation, et un seuil de validité de mesure,
∘ comparaison entre l'écart entre, d'une part la dérivée temporelle entre les deux valeurs acquises, et d'autre part la dérivée temporelle entre les deux valeurs correspondantes du modèle d'estimation, et un seuil de validité de dérivée temporelle de mesure, et
∘ actualisation de l'incrément en fonction du résultat des étapes de comparaison,

Grâce à la présence d'un incrément, le calculateur est en mesure d'ignorer totalement une voie de mesure si cette-dernière est siège d'un phénomène répété de contacts intermittents, indépendamment de l'état d'autres voies de mesure éventuelles. Ceci rend le calculateur robuste à l'apparition de contacts intermittents sur n'importe quelle des voies de mesure, des voies de calculateurs ou des liaisons électriques reliant ces dernières entre elles. Ainsi, en cas d'invalidité d'une voie de mesure, le contrôle de la voie de mesure redondante valide reste possible, celle-ci pouvant même finir par être ignorée au profit d'un modèle d'estimation si des contacts intermittents y persistent. Par ailleurs, la valeur de l'incrément peut alors avantageusement être relevée en fin de mission de vol d'aéronef afin de déterminer l'intensité du phénomène de contacts intermittents sur la voie de mesure contrôlée.

Alternativement, mais facultativement, le procédé selon l'invention peut en outre comprendre les caractéristiques suivantes :
- lors de l'étape d'actualisation :
   ∘ si l'écart entre, d'une part la première valeur de signal acquise, et d'autre part la valeur correspondante du modèle d'estimation, est supérieur au seuil de validité de mesure alors l'incrément est augmenté de 1, sinon l'incrément demeure inchangé, et
   ∘ si l'écart entre, d'une part la dérivée temporelle entre les deux valeurs acquises, et d'autre part la dérivée temporelle entre les deux valeurs correspondantes du modèle d'estimation, est supérieur au seuil de validité de dérivée temporelle de mesure, alors l'incrément est augmenté de 1, sinon l'incrément demeure inchangé,
- la sonde comprend deux voies de mesures respectivement reliées à deux voies de calculateurs, le procédé comprenant les étapes initiales de :
   ∘ acquisition d'une valeur de la mesure,
   ∘ comparaison de la valeur acquise avec un seuil d'invalidité,
   ∘ actualisation d'un incrément supplémentaire en fonction des résultats de l'étape de comparaison, et
   ∘ détermination de la validité d'une des deux voies en fonction de l'incrément supplémentaire actualisé, les étapes initiales étant mises en oeuvre en parallèle sur chacune des voies de calculateurs, les étapes initiales étant répétées successivement jusqu'à ce que l'une des voies soit déterminée invalide, les étapes de traitement étant alors mises en oeuvre sur la voie déterminée valide,
- lors de l'étape d'actualisation, l'incrément supplémentaire est augmenté de 1 si la valeur acquise est supérieure au seuil d'invalidité, et demeure inchangé sinon,
- une voie est déterminée invalide si :
   ∘ à la suite de l'étape d'actualisation, l'incrément supplémentaire excède le seuil d'incrément, et
   ∘ la dernière augmentation de l'incrément supplémentaire est due au fait que la dernière valeur acquise sur ladite voie de calculateur est supérieure au seuil d'invalidité,
- il comprend en outre une étape préalable de réception d'une première et d'une deuxième valeur de mesure d'un modèle d'estimation de la mesure, lesdites valeurs étant synchronisées sur les valeurs acquises,
- il comprend en outre des étapes préalables de définition d'un seuil de validité de mesure, d'un seuil de validité temporelle de mesure, d'un incrément et d'un incrément supplémentaire, d'un seuil d'incrément et d'un seuil d'invalidité,
- le seuil d'incrément vaut 20, et
- la sonde mesure la température en entrée du compresseur haute pression, le seuil de validité de mesure est compris entre 15K et 45K, de préférence entre 25K et 35K, par exemple 30K, et le seuil de validité de dérivée temporelle de mesure est comprise entre 120K/s et 180K/s, de préférence entre 140K/s et 160K/s, par exemple 150 K/s.

L'invention porte également sur un produit programme ordinateur comprenant des instructions de code pour l'exécution d'un procédé de contrôle tel que décrit précédemment, lorsque ce procédé est exécuté par au moins une unité de calcul.

### DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :
- la figure 1, déjà décrite, illustre un phénomène de relaxation électrique sur un signal acquis par une voie de calculateur à partir d'un circuit siège d'une ouverture ponctuelle,
- la figure 2, déjà décrite également, illustre un signal acquis par une voie de calculateur à partir d'un circuit siège d'un phénomène d'un contact intermittent et le signal d'invalidation correspondant,
- la figure 3 illustre un exemple de réalisation d'une chaîne de mesure configurée pour mettre en oeuvre un procédé de contrôlé de mesure,
- la figure 4 est un diagramme fonctionnel des étapes préalables d'un exemple de réalisation du procédé de contrôle selon l'invention,
- la figure 5 est un diagramme fonctionnel des étapes de traitement d'un exemple de réalisation du procédé de contrôle selon l'invention,
- la figure 6 est un organigramme détaillant des étapes supplémentaires de traitement d'un exemple de réalisation du procédé de contrôle selon l'invention, et
- la figure 7 est un diagramme fonctionnel des étapes initiales d'un exemple de réalisation du procédé de contrôle selon l'invention.

### DESCRIPTION DETAILLEE DE L'INVENTION

En référence aux figures, on va maintenant décrire un exemple de réalisation d'un procédé de contrôle E de mesure acquise par une sonde formant capteur moteur de turbomachine.

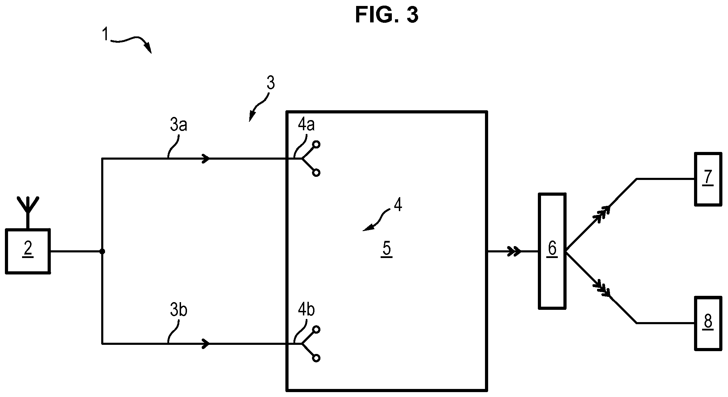

En référence à la figure 3, un tel procédé E peut notamment être mis en oeuvre au sein d'une chaîne de mesure 1 comprenant une sonde 2 formant capteur moteur, ladite sonde 2 comprenant une voie de mesure 3, et un calculateur 5, ledit calculateur 5 comprenant une voie de calculateur 4 reliée à la voie de mesure 3 de la sonde 2. La voie de mesure 3 acquiert des mesures successives représentatives d'une grandeur physique, et transmet un signal temporel électrique représentatif de ces mesures à la voie de calculateur 4. Le calculateur 5 acquiert le signal temporel électrique, et élabore une valeur de mesure à transmettre à une interface de traitement 6. L'interface de traitement 6 renvoie une information relative à la valeur de mesure transmise par le calculateur 5, et liée à un état de la turbomachine, au pilote 7 ou à un système de régulation 8 de la turbomachine.

Les sondes 2 formant capteur pour lesquels le procédé de contrôle E est utile sont notamment celles pour lesquelles un modèle d'estimation de la mesure acquise est envisageable. A titre d'exemples purement illustratifs, de telles sondes 2 sont : le capteur de température en entrée du compresseur haute pression, le capteur de température des gaz d'échappement (ou « EGT », pour « Exhaust Gas Température » dans la terminologie anglo-saxonne), ou les capteurs de position (ou « LVDT », pour « Linear Variable Differential Transfer » dans la terminologie anglo-saxonne »). Avantageusement, le procédé de contrôle E est applicable aux mesures de température, telle que la température de fluides gazeux ou liquides de turbomachine, comme l'huile de lubrification ou le carburant. Pour des fluides gazeux à haute température, par exemple les gaz d'échappement, une sonde de température de type thermocouple est particulièrement adaptée.

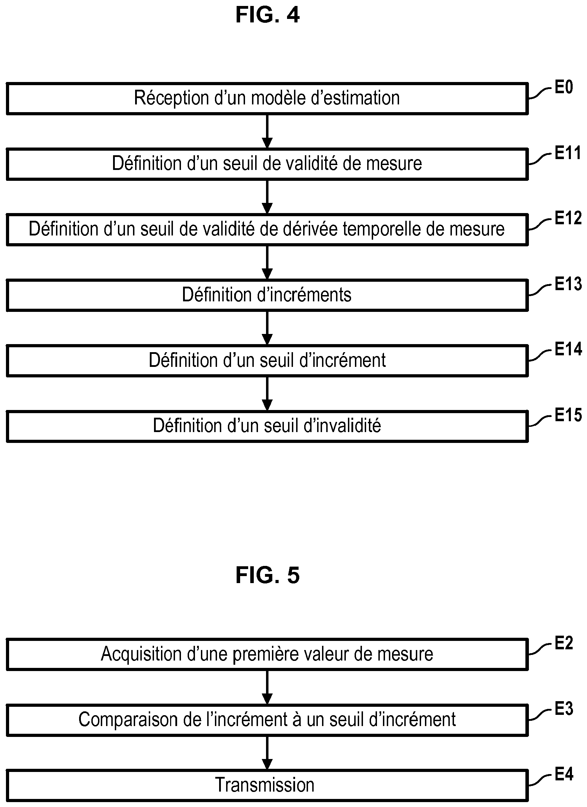

En référence à la figure 4, lors d'une première étape préalable E0 le calculateur 5 reçoit une valeur de mesure Sₑₛₜ d'un modèle d'estimation de la mesure acquise par la sonde 2. Le cas échéant, comme il sera explicité par la suite, des valeurs de mesure successives Sₑₛₜ, Sₑₛₜ₂ d'un modèle d'estimation de la mesure acquise par la sonde 2 peuvent également être reçues.

La valeur modélisée peut par exemple avoir été élaborée à partir d'autres mesures acquises par ailleurs. Ce modèle peut avoir été estimé par le calculateur 5, ou fourni par l'utilisateur ou le constructeur et, le cas échéant, stocké dans une mémoire du calculateur 5.

En tout état de cause, la valeur de mesure du modèle d'estimation est représentative d'une mesure de la même grandeur physique que celle mesurée par la sonde 2. En outre, le modèle d'estimation est synchronisé sur le signal électrique réel transmis par la sonde 2 sur la voie de calculateur 5. A cet égard, chaque valeur de mesure extraite du signal transmis possède une valeur correspondante au sein du modèle d'estimation, le calculateur 5 étant configuré pour établir cette correspondance entre les valeurs de mesure successivement extraites du signal acquis et les valeurs de mesure successives du modèle d'estimation.

Toujours en référence à la figure 4, lors d'étapes préalables un seuil de validité de mesure S_{VM} est défini E11, un seuil de validité de dérivée temporelle de mesure S_{VDTM} est défini E12, un incrément I, dont la valeur est nulle par défaut, est défini E13, et un seuil d'incrément S_{I} est défini E14.

Certains ou la totalité des seuils de validité de mesure S_{VM} et de dérivée temporelle de mesure S_{VDTM} peuvent être élaborés en étudiant des cycles de fonctionnement de la turbomachine lors de vols de l'aéronef sans panne de la sonde 2, c'est-à-dire sans apparition de phénomène de circuits intermittents, la valeur du modèle pouvant être reconstruite à partir des données de vol disponibles et comparée avec la valeur sélectionnée de la sonde 2. Lorsque l'échantillonnage des données de vol disponibles est insuffisant pour permettre l'élaboration d'un seuil S_{VM}, S_{VDTM}, des données d'essai de développement peuvent éventuellement être utilisées pour élaborer le seuil S_{VM}, S_{VDTM}. Ces seuils S_{VM}, S_{VDTM} peuvent être modifiés entre deux vols de l'aéronef par une nouvelle élaboration en fonction des nouvelles données de vol disponibles. La récupération des données de mesure sur une chaîne de mesure 1, et la comparaison avec les données reçues d'estimation par le modèle lors de ces cycles de fonctionnement, permettent de mesurer un écart maximum observable entre signal mesuré et signal modèle. Cet écart correspond aux variations réelles de la grandeur physique lors du fonctionnement d'une turbomachine. Par conséquent, il suffit de proposer une marge suffisamment importante par rapport à cet écart maximum observable pour en déduire les seuils de validité S_{VM}, S_{VDTM}. Il est également possible de récupérer des données de moteurs d'essai fonctionnant en configuration nominale. Les variations de grandeur physique observée permettent ainsi de discriminer les évolutions d'origine physique (i.e. logiques lors du fonctionnement) des évolutions d'origine électrique (i.e. les contacts intermittents).

Avantageusement, dans le cas où la grandeur physique mesurée par la sonde 2 est la température en entrée du compresseur haute pression, la Demanderesse a constaté qu'un seuil optimal de validité S_{VM} de la mesure est compris entre 15K et 45K, de préférence entre 25K et 35K, par exemple 30K. En outre, dans ce cas, un seuil optimal de validité de dérivée temporelle de mesure S_{VDTM} est compris entre 120K/s et 180K/s, de préférence entre 140K/s et 160K/s, par exemple 150 K/s.

En référence à la figure 5, une fois les étapes préalables de réception d'un modèle d'estimation E0 et de définition E11, E12, E13, E14 mises en oeuvre, le procédé de contrôle E prévoit des étapes de traitement E2, E3, E4 du signal reçu sur la voie de calculateur 4. Ces étapes de traitement E2, E3, E4 ne sont mises en oeuvre que lorsque la turbomachine est démarrée, et que l'initialisation du calculateur 5 est terminée. Ces deux conditions garantissent que le modèle d'estimation de la mesure acquise par la sonde, reçu lors de l'étape préalable E0, est précis.

Lors d'une première étape de traitement E2, une première valeur de mesure S_{acq} est extraite d'un signal représentatif de mesure acquis sur la voie de calculateur 3, ladite valeur S_{acq} correspondant à la valeur Sₑₛₜ du modèle d'estimation, comme précédemment décrit.

Lors d'une deuxième étape de traitement E3, l'incrément I est comparé au seuil d'incrément S_{I}.

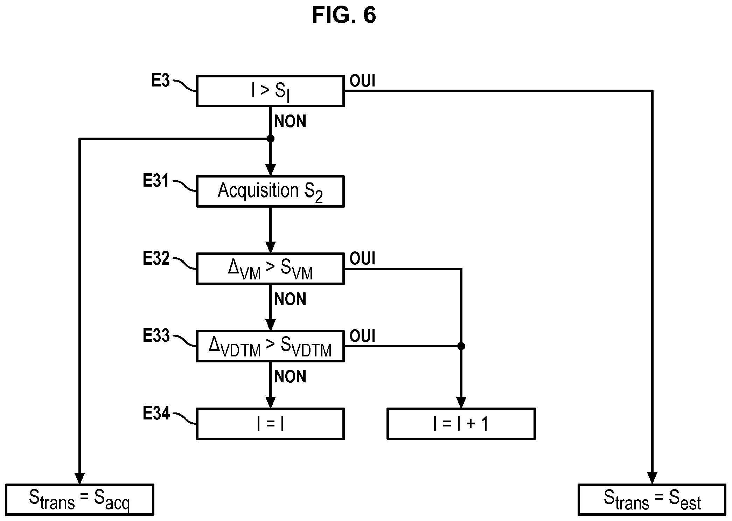

Lors d'une troisième étape de traitement E4, une valeur de mesure à traiter est transmise à l'interface de traitement 6 qui renvoie une information relative à l'état de la turbomachine au pilote 7 ou à un dispositif de régulation 8 de la turbomachine. Comme visible sur la figure 6, la valeur de mesure à traiter transmise dépend du résultat de l'étape de comparaison E3.

Si l'incrément I est supérieur au seuil d'incrément S_{I}, la valeur transmise Sₜᵣₐₙₛ est la valeur du modèle d'estimation Sₑₛₜ correspondant à la première valeur acquise S_{acq} extraite du signal.

Si l'incrément I est inférieur au seuil d'incrément S_{I}, la valeur transmise Sₜᵣₐₙₛ est la première valeur acquise S_{acq}, et le procédé de contrôle E met en oeuvre des étapes supplémentaires de traitement E31, E32, E33, E34, avant de mette en oeuvre la troisième étape de traitement E4.

En référence à la figure 6, lors d'une première étape supplémentaire de traitement E31, une deuxième valeur S_{acq2} du signal représentatif de mesure sur la voie de calculateur 4 est acquise, la deuxième valeur S_{acq2} étant successive à la première valeur S_{acq}. Ces valeurs successives S_{acq}, S_{acq2} peuvent être acquises à un intervalle de temps T donné. Avantageusement, cet intervalle de temps T est un multiple de la période de l'horloge interne du calculateur 5, dite « horloge temps réel » (ou « HTR »).

Lors d'une deuxième étape supplémentaire de traitement E32, l'écart Δ_{VM} entre, d'une part la première valeur acquise S_{acq}, et d'autre part la valeur correspondant du signal modèle Sₑₛₜ, est comparée au seuil de validité de mesure S_{VM}.

Lors d'une troisième étape supplémentaire de traitement E33, l'écart Δ_{VDTM} entre, d'une part la dérivée temporelle entre les deux valeurs acquises S_{acq}, S_{acq2}, et d'autre part la dérivée temporelle entre deux valeurs correspondantes successives S_{acq}, S_{acq2} du modèle d'estimation, est comparé au seuil de validité de dérivée temporelle de mesure S_{VDTM}.

Comme visible sur la figure 6, en fonction des résultats de la deuxième E32 et de la troisième E33 étape supplémentaire de traitement, une quatrième étape supplémentaire de traitement E34 d'actualisation de l'incrément est mise en oeuvre.

Si l'écart Δ_{VM} entre, d'une part la première valeur de signal acquise S_{acq}, et d'autre part la valeur correspondante Sₑₛₜ du modèle d'estimation, est supérieur au seuil de validité de mesure S_{VM}, alors l'incrément I est augmenté de 1, sinon l'incrément I demeure inchangé.

Si l'écart Δ_{VDTM} entre, d'une part la dérivée temporelle entre les deux valeurs acquises S_{acq}, S_{acq2}, et d'autre part la dérivée temporelle entre les deux valeurs correspondantes du modèle d'estimation, est supérieur au seuil de validité de dérivée temporelle de mesure S_{VDTM}, alors l'incrément I est augmenté de 1, sinon l'incrément I demeure inchangé.

Deux modes de réalisation du procédé de contrôle E précédemment décrit vont maintenant être détaillés, en référence à la figure 3, le second mode étant généralement privilégié dans la mise en oeuvre du procédé E au sein de turbomachine.

La chaîne de mesure 1 comprend une sonde 2 formant capteur moteur, ladite sonde 2 comprenant deux voies de mesure 3a, 3b redondantes, et un calculateur 5, ledit calculateur comprenant deux voies de calculateur 4a, 4b reliées à chacune des voies de mesure 3a, 3b de la sonde 2. Les voies de mesure 3a, 3b acquièrent chacune des mesures successives représentatives d'une grandeur physique, et transmettent un signal temporel électrique représentatif de ces mesures à chacune des voies 4a, 4b de calculateur 5. Le calculateur 5 acquiert les signaux temporels électriques, et transmet deux valeurs respectives de mesure à une interface de traitement 6. L'interface de traitement 6 élabore une information liée à un état de la turbomachine à partir des deux valeurs transmises, et les renvoie au pilote 7 ou à un système de régulation 8 de la turbomachine.

Dans un premier mode de réalisation, une des voies de mesure 3a est invalide. Par conséquent, les étapes de traitement E2 à E4 sont mises en oeuvre sur le signal acquis par la voie de mesure valide 3b. Les étapes préalables de réception d'un modèle d'estimation E0 et de définition E1 sont mises en oeuvre comme décrit précédemment, et le seuil d'incrément S_{I} est fixé à 20. Alternativement, les étapes préalables E0 et E1 peuvent avoir été mises en oeuvre lors d'un autre cycle de fonctionnement de la turbomachine, ou lors d'essais moteurs effectués lors de maintenance ou lors de tests préalables à l'admission au service actif de la turbomachine. Les résultats de ces étapes E0, E1 ont alors été stockés, par exemple dans une mémoire du calculateur 5. En tout état de cause, une fois la turbomachine en fonctionnement, une première étape E2 est mise en oeuvre. Lors de cette étape E2, des valeurs du signal représentatif de la mesure fournie par la sonde 2 sont donc acquises sur la voie de calculateur valide 4b, traitées successivement par le calculateur 5, et transmises à l'interface de traitement 6. Chaque valeur de mesure est espacée de la valeur qui la suit d'un intervalle de temps T correspondant à la période de l'horloge du calculateur 5.

Dans une première plage temporelle, l'incrément I ayant étant déclaré nul par défaut, les étapes supplémentaires de traitement E31 à E34 sont mises en oeuvre. A chaque fois que le seuil de validité de mesure S_{VM} ou que le seuil de validité de dérivée temporelle de mesure S_{VDTM} sont franchis, l'incrément I est augmenté de 1. Ces franchissements sont essentiellement dus à la présence de contacts intermittents sur la voie valide 3b-4b. Lorsque l'incrément I atteint la valeur du seuil d'incrément S_{I}, la double panne est déclarée, et le calculateur utilise la valeur du modèle d'estimation Sₑₛₜ jusqu'à la fin de la mission de vol.

Dans un second mode de réalisation du procédé de contrôle E, les deux voies de sonde 3a, 3b sont valides a priori. Le procédé de contrôle E permet donc de détecter l'apparition simultanée, ou rapprochée, de contacts intermittents sur l'une et/ou l'autre des voies 3a, 3b, et l'adaptation de la chaîne de mesure 1 en conséquence.

En référence à la figure 4, lors d'une étape préalable supplémentaire E15, un seuil d'invalidité S_{INV} est défini. Ce seuil d'invalidité S_{INV} est défini comme usuellement dans les procédés de contrôle de l'art antérieur. Il s'agit de la valeur de mesure reçue à partir de laquelle le calculateur 5 ignore le signal reçu sur une des voies 3a-4a, 3b-4b en estimant qu'il y a présence d'ouverture du circuit électrique sur une des voies 3a-4a, 3b-4b. Les ouvertures du circuit électrique comprennent notamment un court-circuit ou un circuit ouvert intermittent. Cependant, une valeur de mesure excédant un intervalle d'acquisition du calculateur 5 (typiquement valeur de mesure absurde physiquement) est également considérée comme une ouverture du circuit électrique.

Les étapes préalables E11, E12, E13, E14 sont également mises en oeuvre comme décrit précédemment, et le seuil d'incrément S_{I} est fixé à 20 occurrences. En outre, lors de l'étape préalable de définition d'incrément E13, un incrément supplémentaire I_{S} est défini, dont la valeur est nulle par défaut.

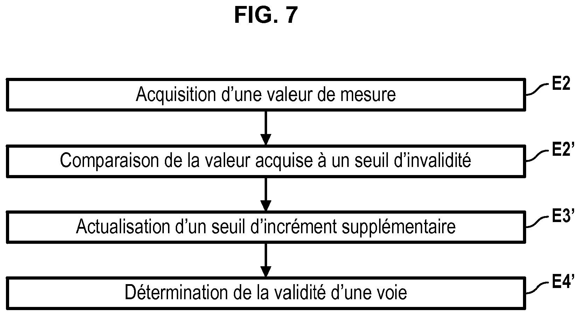

Par la suite, en référence à la figure 7, des étapes initiales de traitement sont mises en oeuvre parallèlement sur chacune des voies de calculateurs 4a, 4b.

Lors d'une première étape initiale, la première étape de traitement E2 est mise en oeuvre parallèlement à partir de chacun des signaux reçus sur les deux voies 4a, 4b de calculateur 5. Chaque mesure acquise est en outre comparée E2' à la valeur de seuil d'invalidité S_{INV}, et l'incrément supplémentaire I_{S} est actualisé E3' en conséquence. Plus précisément, si une des valeurs de mesure acquise sur l'une des voies excède le seuil d'invalidité S_{INV}, l'incrément supplémentaire I_{S} est augmenté de 1, et demeure inchangé sinon.

Lorsque l'incrément supplémentaire Iₛ excède le seuil d'incrément S_{I}, la dernière voie 3a-4a, 3b-4b à avoir causé une augmentation de la valeur de l'incrément Iₛ supplémentaire est déterminée invalide, et la situation devient alors similaire au premier mode de réalisation du procédé de contrôle E décrit précédemment. Les étapes initiales sont donc répétées successivement jusqu'à ce que l'une des voies 3a-4a, 3b-4b soient déterminées invalides. Par la suite, les étapes de traitement E2, E3, E4 du procédé de contrôle E sont mises en oeuvre sur la voie déterminée valide.

Alternativement, une voie 3a-4a, 3b-4b est déterminée invalide si son temps cumulé en panne dépasse un seuil de panne S_{P} prédéterminé, par exemple 30 secondes. Un tel seuil de panne S_{P} peut avoir été défini lors des étapes préalables E15, en même temps que le seuil d'invalidité S_{INV}. Le temps cumulé en panne peut en outre être obtenu par le calculateur 5 en multipliant le nombre d'augmentation d'incrément I successifs sur une voie 3a-4a, 3b-4b par l'intervalle de temps T d'acquisition entre deux mesures successives S_{acq}.

Les différentes étapes du procédé de contrôle E décrit précédemment, selon l'un des modes décrits, peuvent être mises en oeuvre par un ensemble de moyens, ou de modules, pilotables à cet effet. A cet égard, un produit programme d'ordinateur comprenant des instructions de code pour l'exécution d'un tel procédé de contrôle E peut être utilisé, lorsque le procédé E est mis en oeuvre par une unité de calcul. De même, le procédé E pouvant être mis en oeuvre par un ensemble de moyens comprenant des équipements informatiques, un tel produit programme d'ordinateur peut être stocké sur un moyen de stockage lisible par un équipement information.

## Revendications

1. Procédé de contrôle (E) d'une mesure fournie par une sonde (2) formant un capteur moteur d'une turbomachine d'aéronef, et transmise à une interface de traitement (6) de la mesure, la sonde (2) comprenant une voie de mesure (3), ledit procédé (E) étant mis en oeuvre par un calculateur (5) de la turbomachine comprenant une voie de calculateur (4) reliée à la voie de mesure (3) de la sonde (2), le procédé (E) comprenant les étapes de traitement de :
- acquisition (E2) d'une première valeur (S_{acq}) de la mesure sur la voie de calculateur (4),
- comparaison (E3) d'un incrément (I) avec un seuil d'incrément (S_{I}),
- transmission (E4) à l'interface de traitement (6) d'une mesure à traiter (Sₜᵣₐₙₛ) qui est choisie :
• égale à la valeur (Sₑₛₜ) d'un modèle d'estimation de la mesure reçue, si l'incrément (I) est supérieur au seuil d'incrément (S_{I}), ou
• égale à la première valeur (S_{acq}) de la mesure acquise, si l'incrément (I) est inférieur au seuil d'incrément (S_{I}); si l'incrément (I) est inférieur au seuil d'incrément (S_{I}), le procédé (E) comprend également les étapes supplémentaires de traitement de :
- acquisition (E31) d'une deuxième valeur (S_{acq2}) de mesure sur la voie de calculateur (4), la deuxième valeur (S_{acq2}) étant successive à la première valeur (S_{acq}) d'un intervalle de temps (T) donné,
- comparaison (E32) entre l'écart (Δ_{VM}) entre, d'une part la première valeur acquise (S_{acq}), et d'autre part la valeur correspondante (Sₑₛₜ) du modèle d'estimation, et un seuil de validité de mesure (S_{VM}),
- comparaison (E33) entre l'écart (Δ_{VDTM}) entre, d'une part la dérivée temporelle entre les deux valeurs acquises (S_{acq}, S_{acq2}), et d'autre part la dérivée temporelle entre les deux valeurs correspondantes (Sₑₛₜ, Sₑₛₜ₂) du modèle d'estimation, et un seuil de validité de dérivée temporelle de mesure (S_{VDTM}), et
- actualisation (E34) de l'incrément (I) en fonction du résultat des étapes de comparaison (E32, E33).

2. Procédé (E) selon la revendication 1, dans lequel lors de l'étape d'actualisation (E34) :
- si l'écart (Δ_{VM}) entre, d'une part la première valeur de signal acquise (S_{acq}), et d'autre part la valeur correspondante (Sₑₛₜ) du modèle d'estimation, est supérieur au seuil de validité de mesure (S_{VM}) alors l'incrément (I) est augmenté de 1, sinon l'incrément (I) demeure inchangé, et
- si l'écart (Δ_{VDTM}) entre, d'une part la dérivée temporelle entre les deux valeurs acquises (S_{acq}, S_{acq2}), et d'autre part la dérivée temporelle entre les deux valeurs correspondantes (Sₑₛₜ, Sₑₛₜ₂) du modèle d'estimation, est supérieur au seuil de validité de dérivée temporelle de mesure (S_{VDTM}), alors l'incrément (I) est augmenté de 1, sinon l'incrément (I) demeure inchangé.

3. Procédé (E) selon l'une des revendications 1 à 2, dans lequel la sonde (2) comprend deux voies de mesures (3a, 3b) respectivement reliées à deux voies de calculateurs (4a, 4b), le procédé (E) comprenant les étapes initiales de :
- acquisition (E2) d'une valeur de la mesure (S_{acq}),
- comparaison (E2') de la valeur acquise (S_{acq}) avec un seuil d'invalidité (S_{INV}),
- actualisation (E3') d'un incrément supplémentaire (I_{S}) en fonction des résultats de l'étape de comparaison (E2'), et
- détermination (E4') de la validité d'une des deux voies (3a-4a, 3b-4b) en fonction de l'incrément supplémentaire (I_{S}) actualisé, les étapes initiales (E2, E2', E3', E4') étant mises en oeuvre en parallèle sur chacune des voies de calculateurs (4a, 4b) en actualisant (E3') le même incrément supplémentaire (I_{S}), les étapes initiales (E2, E2', E3', E4') étant répétées successivement jusqu'à ce que l'une des voies (3a-4a, 3b-4b) soit déterminée invalide, les étapes de traitement (E2, E3, E4) étant alors mises en oeuvre sur la voie (3a-4a, 3b-4b) déterminée valide.

4. Procédé (E) selon la revendication 3, dans lequel, lors de l'étape d'actualisation (E3'), l'incrément supplémentaire (I_{S}) est augmenté de 1 si la valeur acquise (S_{acq}) est supérieure au seuil d'invalidité (S_{INV}), et demeure inchangé sinon.

5. Procédé selon la revendication 4, dans lequel une voie (3a-4a, 3b-4b) est déterminée invalide si :
- à la suite de l'étape d'actualisation (E3'), l'incrément supplémentaire (I_{S}) excède le seuil d'incrément (S_{I}), et
- la dernière augmentation de l'incrément supplémentaire (I_{S}) est due au fait que la dernière valeur acquise (S_{acq}) sur ladite voie de calculateur (3a-4a, 3b-4b) est supérieure au seuil d'invalidité (S_{INV}).

6. Procédé (E) selon l'une des revendications 1 à 5, comprenant en outre une étape préalable de réception (E0) d'une première et d'une deuxième valeur de mesure (Sₑₛₜ, Sₑₛₜ₂) d'un modèle d'estimation de la mesure, lesdites valeurs (Sₑₛₜ, Sₑₛₜ₂) étant synchronisées sur les valeurs (S_{acq}, S_{acq2}) acquises.

7. Procédé (E) selon l'une des revendications 1 à 6, comprenant en outre des étapes préalables de définition (E11, E12, E13, E14, E15) d'un seuil de validité de mesure (S_{VM}), d'un seuil de validité temporelle de mesure (S_{VDTM}), d'un incrément (I) et d'un incrément supplémentaire (I_{S}), d'un seuil d'incrément (S_{I}) et d'un seuil d'invalidité (S_{INV}).

8. Procédé (E) selon l'une des revendications 1 à 7, dans lequel le seuil d'incrément (S_{I}) vaut 20.

9. Procédé (E) selon l'une des revendications 1 à 8, dans lequel la sonde (2) mesure la température en entrée du compresseur haute pression, le seuil de validité de mesure (S_{VM}) est compris entre 15K et 45K, de préférence entre 25K et 35K, par exemple 30K, et le seuil de validité de dérivée temporelle de mesure (S_{VDTM}) est comprise entre 120K/s et 180K/s, de préférence entre 140K/s et 160K/s, par exemple 150 K/s.

10. Produit programme d'ordinateur comprenant des instructions de code pour l'exécution d'un procédé de contrôle (E) selon l'une des revendications 1 à 9, lorsque ce procédé (E) est exécuté par au moins une unité de calcul.

## Patentansprüche

1. Verfahren zur Steuerung (E) einer Messung, die von einer Sonde (2) bereitgestellt wird, die einen Motorsensor eines Flugzeugturbinentriebwerks bildet, und an eine Verarbeitungsschnittstelle (6) der Messung weitergeleitet wird, wobei die Sonde (2) einen Messweg (3) umfasst, wobei das Verfahren (E) von einem Rechner (5) des Turbinentriebwerks durchgeführt wird, der einen Berechnungsweg (4) umfasst, der mit dem Messweg (3) der Sonde (2) verbunden ist, wobei das Verfahren (E) die folgenden Verarbeitungsschritte umfasst:
- Erfassen (E2) eines ersten Werts (S_{acq}) der Messung auf dem Berechnungsweg (4),
- Vergleichen (E3) eines Inkrements (I) mit einem Inkrement-Schwellenwert (S_{I}),
- Übertragen (E4) an die Verarbeitungsschnittstelle (6) einer zu verarbeitenden Messung (Sₜᵣₐₙₛ), die gewählt ist:
• gleich dem Wert (Sₑₛₜ) eines Schätzmodells der empfangenen Messung, wenn das Inkrement (I) größer als der Inkrement-Schwellenwert (S_{I}) ist, oder
• gleich dem ersten Wert (S_{acq}) der erfassten Messung, wenn das Inkrement (I) kleiner als der Inkrement-Schwellenwert (S_{I}) ist;
wenn das Inkrement (I) kleiner als der Inkrement-Schwellenwert (S_{I}) ist, umfasst das Verfahren (E) ebenfalls die folgenden zusätzlichen Verarbeitungsschritte:
- Erfassen (E31) eines zweiten Messwerts (S_{acq2}) auf dem Berechnungsweg (4), wobei der zweite Wert (S_{acq2}) dem ersten Wert (S_{acq}) in einem bestimmten Zeitintervall (T) folgt,
- Vergleichen (E32) zwischen der Abweichung (Δ_{VM}) zwischen einerseits dem ersten erfassten Wert (S_{acq}) und andererseits dem entsprechenden Wert (Sₑₛₜ) des Schätzmodells und einem Gültigkeitsschwellenwert der Messung (S_{VM}) ,
- Vergleichen (E33) zwischen der Abweichung (Δ_{VDTM}) zwischen einerseits der Zeitableitung zwischen den zwei erfassten Werten (S_{acq}, S_{acq2}) und andererseits der Zeitableitung zwischen den zwei entsprechenden Werten (Sₑₛₜ, Sₑₛₜ₂) des Schätzmodells und einem Gültigkeitsschwellenwert der Zeitableitung der Messung (S_{VDTM}), und
- Aktualisieren (E34) des Inkrements (I) in Abhängigkeit vom Ergebnis der Vergleichsschritte (E32, E33) .

2. Verfahren (E) nach Anspruch 1, wobei beim Aktualisierungsschritt (E34):
- wenn die Abweichung (Δ_{VM}) zwischen einerseits dem ersten erfassten Signalwert (S_{acq}) und andererseits dem entsprechenden Wert (Sₑₛₜ) des Schätzmodells größer als der Gültigkeitsschwellenwert der Messung (S_{VM}) ist, dann das Inkrement (I) um 1 erhöht wird, wobei das Inkrement (I) anderenfalls unverändert bleibt, und
- wenn die Abweichung (Δ_{VDTM}) zwischen einerseits der Zeitableitung zwischen den zwei erfassten Werten (S_{acq}, S_{acq2}) und andererseits der Zeitableitung zwischen den zwei entsprechenden Werten (Sₑₛₜ, Sₑₛₜ₂) des Schätzmodells größer als der Gültigkeitsschwellenwert der Zeitableitung der Messung (S_{VDTM}) ist, dann das Inkrement (I) um 1 erhöht wird, wobei das Inkrements (I) anderenfalls unverändert bleibt.

3. Verfahren (E) nach einem der Ansprüche 1 bis 2, wobei die Sonde (2) zwei Messwege (3a, 3b) umfasst, die jeweils mit zwei Berechnungswegen (4a, 4b) verbunden sind, wobei das Verfahren (E) die folgenden Anfangsschritte umfasst:
- Erfassen (E2) eines Werts der Messung (S_{acq}),
- Vergleichen (E2') des erfassten Werts (S_{acq}) mit einem Ungültigkeitsschwellenwert (S_{INV}),
- Aktualisieren (E3') eines zusätzlichen Inkrements (Iₛ) in Abhängigkeit von den Ergebnissen des Vergleichsschritts (E2'), und
- Bestimmen (E4') der Gültigkeit eines der zwei Wege (3a-4a, 3b-4b) in Abhängigkeit vom aktualisierten zusätzlichen Inkrement (Iₛ),
wobei die Anfangsschritte (E2, E2', E3', E4') parallel auf jedem der Berechnungswege (4a, 4b) durchgeführt werden, indem das gleiche zusätzliche Inkrement (Iₛ) aktualisiert wird (E3'), wobei die Anfangsschritte (E2, E2', E3', E4') nacheinander wiederholt werden, bis einer der Wege (3a-4a, 3b-4b) als ungültig bestimmt wird, wobei die Verarbeitungsschritte (E2, E3, E4) dann auf dem als gültig bestimmten Weg (3a-4a, 3b-4b) durchgeführt werden.
die anfänglichen Schritte werden parallel auf jedem der Steuergerätekanäle durchgeführt, wobei das gleiche zusätzliche Inkrement aktualisiert wird

4. Verfahren (E) nach Anspruch 3, wobei beim Aktualisierungsschritt (E3') das zusätzliche Inkrement (Iₛ) um 1 erhöht wird, wenn der erfasste Wert (S_{acq}) größer als der Ungültigkeitsschwellenwert (S_{INV}) ist und andernfalls unverändert bleibt.

5. Verfahren nach Anspruch 4, wobei ein Weg (3a-4a, 3b-4b) als ungültig bestimmt wird, wenn:
- nach dem Aktualisierungsschritt (E3') das zusätzliche Inkrement (Iₛ) den Inkrement-Schwellenwert (S_{I})überschreitet, und
- die letzte Erhöhung des zusätzlichen Inkrements (Iₛ) darauf zurückzuführen ist, dass der letzte auf dem Berechnungsweg (3a-4a, 3b-4b) erfasste Wert (S_{acq}) größer als der Ungültigkeitsschwellenwert (S_{INV}) ist.

6. Verfahren (E) nach einem der Ansprüche 1 bis 5, umfassend ferner einen vorherigen Empfangsschritt (E0) eines ersten und eines zweiten Messwerts (Sₑₛₜ, Sₑₛₜ₂) eines Schätzmodells der Messung, wobei die Werte (Sₑₛₜ, Sₑₛₜ₂) auf den erfassten Werten (S_{acq}, S_{acq2}) synchronisiert sind.

7. Verfahren (E) nach einem der Ansprüche 1 bis 6, umfassend ferner vorherige Definitionsschritte (E11, E12, E13, E14, E15) eines Gültigkeitsschwellenwert der Messung (S_{VM}), eines Schwellenwerts der zeitlichen Gültigkeit der Messung (S_{VDTM}) , eines Inkrements (I) und eines zusätzlichen Inkrements (Iₛ), eines Inkrement-Schwellenwerts (S_{I}) und eines Ungültigkeitsschwellenwert (S_{INV}) .

8. Verfahren (E) nach einem der Ansprüche 1 bis 7, wobei der Inkrement-Schwellenwert (S_{I})20 beträgt.

9. Verfahren (E) nach einem der Ansprüche 1 bis 8, wobei die Sonde (2) die Temperatur am Eingang des Hochdruckkompressors misst, wobei der Gültigkeitsschwellenwert der Messung (S_{VM}) zwischen 15 K und 45 K, vorzugsweise zwischen 25 K und 35 K, beispielsweise bei 30 K liegt, und der Gültigkeitsschwellenwert der Zeitableitung der Messung (S_{VDTM}) zwischen 120 K/s und 180 K/s, vorzugsweise zwischen 140 K/s und 160 K/s, beispielsweise bei 150 K/s liegt.

10. Rechnerprogrammprodukt, umfassend Codebefehle für die Ausführung eines Steuerungsverfahrens (E) nach einem der Ansprüche 1 bis 9, wenn dieses Verfahren (E) von mindestens einer Recheneinheit durchgeführt wird.

## Claims

1. Method (E) of controlling a measurement supplied by a probe (2) forming an engine sensor of an aircraft turbomachine, and transmitted to an interface (6) for processing the measurement, the probe (2) comprising a measurement channel (3), the said method (E) being implemented by a computer (5) of the turbomachine comprising a computer channel (4) connected to the measurement channel (3) of the probe (2), the method (E) comprising the steps of processing :
- acquisition (E2) of a first value (S_{acq} ) of the measurement on the computer channel (4),
- comparison (E3) of an increment (I) with an increment threshold (S_{I} ),
- transmission (E4) to the processing interface (6) of a measurement to be processed (Sₜᵣₐₙₛ) which is selected:
• equal to the value (Sₑₛₜ) of an estimation model of the received measurement, if the increment (I) is higher than the increment threshold (SI), or
• equal to the first value (Sacq) of the acquired measurement, if the increment (I) is less than the increment threshold (SI); if the increment (I) is less than the increment threshold (SI), the method (E) also comprises the additional steps of processing :
- acquisition (E31) of a second measurement value (S_{acq2} ) on the computer channel (4), the second value (S_{acq2}) being successive to the first value (S_{acq}) of a given time interval (T),
- comparison (E32) between the deviation (Δ_{VM}) between, on the one hand, the first acquired value (S_{acq}), and on the other hand, the corresponding value (Sₑₛₜ) of the estimation model, and a measurement validity threshold (S_{VM}),
- comparison (E33) between the deviation (Δ_{VDTM}) between, on the one hand, the time derivative between the two acquired values (S_{acq} , S_{acq2}), and, on the other hand, the time derivative between the two corresponding values (Sₑₛₜ , Sₑₛₜ₂) of the estimation model, and a measurement time derivative validity threshold (S_{VDTM}), and
- update (E34) of the increment (I) according to the result of the comparison steps (E32, E33).

2. The method (E) of claim 1, wherein in the update step (E34):
- if the deviation (Δ_{VM}) between the first acquired signal value (S_{acq}) on the one hand, and the corresponding value (Sₑₛₜ) of the estimation model on the other hand, is greater than the measurement validity threshold (S_{VM}) then the increment (I) is increased by 1, otherwise the increment (I) remains unchanged, and
- if the difference (Δ_{VDTM}) between, on the one hand, the time derivative between the two acquired values (S_{acq} , S_{acq2}), and, on the other hand, the time derivative between the two corresponding values (Sₑₛₜ , Sₑₛₜ₂) of the estimation model, is greater than the measurement time derivative validity threshold (S_{VDTM}), then the increment (I) is increased by 1, otherwise the increment (I) remains unchanged.

3. Method (E) according to one of claims 1 to 2, wherein the probe (2) comprises two measurement channels (3a, 3b) respectively connected to two computer channels (4a, 4b), the method (E) comprising the initial steps of:
- acquisition (E2) of a measurement value (S_{acq}),
- comparison (E2') of the earned value (S_{acq}) with a disability threshold (S_{INV}),
- updating (E3') an additional increment (Is) based on the results of the comparison step (E2'), and
- determination (E4') of the validity of one of the two channels (3a-4a, 3b-4b) as a function of the updated increment (I_{S}),
the initial steps (E2, E2', E3', E4') being implemented in parallel on each of the computer channels (4a, 4b) by updating (E3') the same additional increment (I_{S}), the initial steps (E2, E2', E3', E4') being repeated successively until one of the channels (3a-4a, 3b-4b) is determined to be invalid, the processing steps (E2, E3, E4) then being implemented on the channel (3a-4a, 3b-4b) determined to be valid.

4. The method (E) according to claim 3, wherein in the update step (E3'), the additional increment (I_{S}) is increased by 1 if the earned value (S_{acq}) is greater than the disability threshold (S_{INV}), and remains unchanged otherwise.

5. The method of claim 4, wherein a channel (3a-4a, 3b-4b) is determined invalid if:
- following the update step (E3'), the additional increment (Is) exceeds the increment threshold (S_{I} ), and
- the last increase of the additional increment (I_{S}) is due to the fact that the last acquired value (S_{acq}) on said computer channel (3a-4a, 3b-4b) is higher than the disability threshold (S_{INV}).

6. Method (E) according to one of claims 1 to 5, further comprising a prior step of receiving (E0) a first and a second measurement value (Sₑₛₜ , Sₑₛₜ₂) of a measurement estimation model, said values (Sₑₛₜ , Sₑₛₜ₂) being synchronized with the values (S_{acq} , S_{acq2}) acquired.

7. Method (E) according to one of claims 1 to 6, further comprising preliminary steps of defining (E11, E12, E13, E14, E15) a measurement validity threshold (S_{VM}), a measurement temporal validity threshold (S_{VDTM}), an increment (I) and an additional increment (I_{S}), an increment threshold (S_{I})and a disability threshold (S_{INV} ).

8. The method (E) of any of claims 1 to 7, wherein the increment threshold (S_{I})is 20.

9. Method (E) according to one of claims 1 to 8, in which the probe (2) measures the temperature at the inlet of the high-pressure compressor, the measurement validity threshold (S_{VM}) is between 15K and 45K, preferably between 25K and 35K, for example 30K, and the measurement time derivative validity threshold (S_{VDTM}) is between 120K/s and 180K/s, preferably between 140K/s and 160K/s, for example 150K/s.

10. A computer program product comprising code instructions for executing a control method (E) according to any of claims 1 to 9, when said method (E) is executed by at least one computing unit.
